# EUROPÄISCHE PATENTANMELDUNG

(11) **EP 0 926 523 A1**
(43) Veröffentlichungstag der Anmeldung: **30.06.1999**
(21) Anmeldenummer: 98122880.2
(22) Anmeldetag: 02.12.1998
(51) Int. Cl.: G02B 6/44, G02B 6/36

(54) **Gehäuse für optische Komponenten**

(30) Priorität: 18.12.1997 DE 29722349 U
(71) Anmelder: REHAU AG + Co, 95111 Rehau (DE)
(72) Erfinder: Beyer, Wolfgang c/o REHAU AG + Co., 95111 Rehau (DE)

(57) **Zusammenfassung**

Der Vorteil dieser Anordnung ist darin zu sehen, daß nahezu beliebige Vorratslängen von Lichtwellenleiterfasern und/oder Reservefasern am Boden (11) der Kassette unterhalb des Halters (2) abgelegt werden können, während die einzelnen geschnittenen Lichtwellenleiterfasern nach der Spleißung auf der Oberseite des Halters (2) beispielweise durch Spleißschutzröhrchen geschützt zwischen den Raststegen (28) des Halters eingeklemmt und abgelegt werden können. Die Erfindung schafft also eine klare Trennung zwischen dem Faservorrat einerseits und den gespleißten Fasern andererseits.

Ein weiterer Vorteil ist die beidseitige Abklappbarkeit des Halters von den Seitenwänden (12,13) des Gehäuseunterteils (1). Diese Möglichkeit bewirkt, daß der Halter an der Seite, auf die es gerade ankommt, wie eine Buchseite hochgeklappt werden kann.

## Beschreibung

Die Erfindung betrifft ein Gehäuse für optische Komponenten mit einem Gehäuseunterteil und wenigstens einem, als separates Bauteil ausgebildeten und am Gehäuseunterteil anlenkbaren Halter für Koppler und/oder Spleiße.

Ein gattungsgemäßes Gehäuse ist aus der DE 44 15 218 C1 bekannt. Dort ist eine Spleißkassette zur wahlweisen Aufnahme von mehreren Haltern für Koppler oder Spleiße beschrieben, wobei die Spleißhalter so ausgeführt sind, daß beispielsweise jeweils 2 Spleißschutzelemente auf der Kassettenlängsseite hintereinander angebracht werden können. Dadurch entfällt ein Wechsel auf die andere Kassettenseite. Auf der Unterseite der Spleiß- oder Kopplerhalter sind halbkreisförmige Längsnuten angeformt, die mit entsprechenden Längsnuten auf dem Kassettenboden zusammen röhrenförmige Kanäle bilden. Durch diese Kanäle können einzelne Lichtwellenleiterfasern gezogen werden, ohne über die Spleiße geführt werden zu müssen. Die Spleiß- bzw. Kopplerhalter werden mit je 4 Rasthaken in Löchern des Kassettenbodens eingerastet.

Die bekannte Spleißkassette schafft zwar die Möglichkeit, in begrenztem Maße Lichtwellenleiterfasern ungeschnitten oder als Vorratsfasern unterhalb der Halter am Boden der Kassette entlangzuführen. Diese Möglichkeit wird allerdings durch die Gestaltung der Nuten an der Unterseite der Halter und an der Oberseite des Bodens stark eingeschränkt. Darüber hinaus ist bei dieser Gestaltungsart als nachteilig zu bezeichnen, daß die einzelnen Halter über Rasthaken in Öffnungen am Boden eingerastet werden müssen. Diese Maßnahme bedeutet einen erhöhten Montageaufwand bei der Anordnung der einzelnen Halter auf dem Kassettenboden.

Hier setzt die Erfindung ein, die es sich zur Aufgabe gestellt hat, eine nahezu unbegrenzte Nutzungsmöglichkeit der Kassettenhöhe in zwei Etagen einerseits für Spleiße oder Koppler und andererseits für ungeschnittene, durchlaufende Lichtwellenleiterfasern oder ungespleißte Reservefasern zwischen Kassettenboden und Halterunterseite zu schaffen. Erfindungsgemäß wird dazu vorgeschlagen, daß der Halter durchgehend quer über die Gehäusebreite verläuft und mit seinen freien Endbereichen an den Seitenwänden des Gehäuseunterteils wechselseitig abklappbar angelenkt ist.

Der Vorteil dieser Anordnung ist darin zu sehen, daß nahezu beliebige Vorratslängen von Lichtwellenleiterfasern und/oder Reservefasern am Boden der Kassette unterhalb des Halters abgelegt werden können, während die einzelnen geschnittenen Lichtwellenleiterfasern nach der Spleißung auf der Oberseite des Halters beispielsweise durch Spleißschutzröhrchen geschützt zwischen den Raststegen des Halters eingeklemmt und abgelegt werden können. Die Erfindung schafft also eine klare Trennung zwischen dem Faservorrat einerseits und den gespleißten Fasern andererseits. Es handelt sich hierbei um eine räumliche Trennung dieser elektrischen Bauelemente dergestalt, daß mit den geschnittenen Lichtwellenleiterfasern die entsprechenden Spleißverbindungen auf der Oberseite des Halters hergestellt werden können, ohne daß der Faservorrat zwischen der Unterseite des Halters und dem Boden der Spleißkassette irgendwie in Mitleidenschaft gezogen würde. Dadurch wird die Ordnung innerhalb der Spleißkassette bei nahezu beliebigem Faservorrat auf der Unterseite trotz der verschiedensten Arbeiten an der Oberseite nicht beeinträchtigt, denn diese Arbeiten an der Oberseite haben keine Auswirkungen auf den Faservorrat oder die im Betrieb befindlichen durchlaufenden Fasern auf der Unterseite.

Ein weiterer Vorteil ist die beidseitige Abklappbarkeit des Halters von den Seitenwänden des Gehäuseunterteils. Diese Möglichkeit bewirkt, daß der Halter an der Seite, auf die es gerade ankommt, wie eine Buchseite hochgeklappt werden kann. Das Unterteil der Kassette wird dadurch je nach Aufklappmaß von oben her zugänglich, und es können Reservefasern von unten nach oben zum Spleißen verlegt werden oder einzelne Fasern des untenliegenden Faservorrats geschnitten und zum Spleißen nach oben verlegt werden.

Nach Abschluß dieser Maßnahmen wird der Halter wieder nach unten geklappt und in seinem Rastsitz an der Seitenwand der Kassette festgelegt. Dieser Rastsitz ist an der Seitenwand der Kassette so angelegt, daß genügend Zwischenraum zwischen der Unterseite des Halters und dem Boden der Kassette verbleibt, um den Faservorrat dort anzulegen.

Vorteilhaft ist dabei der Halter über lösbare Gelenkverbindungen mit den Seitenwänden des Gehäuseunterteils verbunden. An diesem Gehäuseunterteil und am Halter sind Befestigungselemente, Umlenkungen und Niederhalter für ungeschnittene, durchlaufende Lichtwellenleiterfasern oder ungespleißte Reservefasern sowie für gespleißte Lichtwellenleiterfasern angeformt. Weiter können am Rande des Gehäuseunterteils und am Halter im Bereich der Gelenkverbindungen Führungsmittel zur fixierten Aufnahme geschnittener Lichtwellenleiterfasern angeordnet sein.

In der Zeichnung ist ein Ausführungsbeispiel des erfindungsgemäßen Gehäuses schematisch dargestellt; es zeigt:
Figur 1 eine isometrische Darstellung des Gehäuseunterteils mit aufgeklapptem Halter
Figur 2 eine Draufsicht auf das Gehäuse mit dem Halter in eingerastetem Zustand

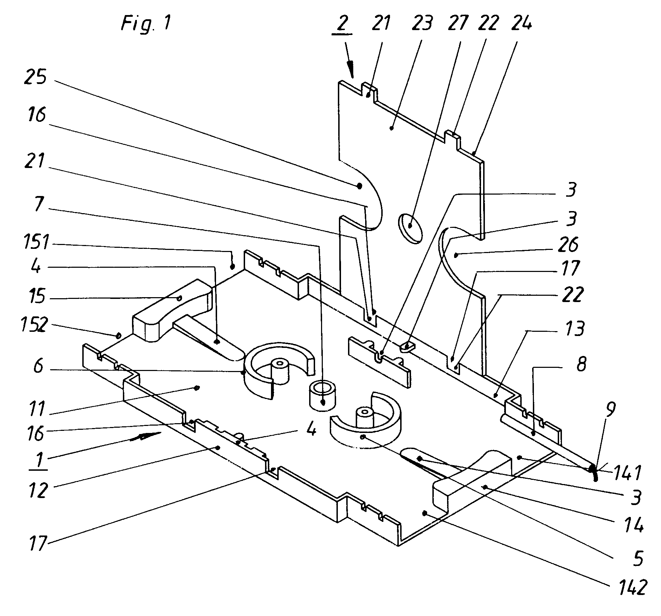

Figur 1 zeigt das Gehäuseunterteil 1 mit dem Boden 11, den Seitenwänden 12, 13 sowie den Stirnwänden 14, 15.

Der Halter 2 ist mit seinen Gelenken 21, 22 in die Gelenkverbinder 16, 17 an den Seitenwänden 12, 13 des Bodens eingesteckt. Bei diesen Gelenken 16, 17 kann es sich beispielsweise um Schwabenschwanzführungen handeln, in welche schwalbenschwanzförmige Gelenkverbinder 21, 22 am Halter 2 eingreifen. Es können aber auch am Halter 2 jeweils zwei Achsen an jeder Seite angeformt sein, welche in entsprechende Aufnahmen an den Rändern der Seitenwände 12, 13 einrasten.

Die Verbindung zwischen dem Halter 2 und den Gelenken 21, 22 kann dabei durch ein flexibles Element, z.B. ein Filmscharnier, hergestellt sein, so daß der Halter 2 bei bestehendem Steckeingriff der Gelenke 21, 22 in die Gelenkverbinder 16, 17 nach oben geklappt werden kann, um den Zugriff in den Vorratsraum am Boden 11 des Gehäuseunterteils zu erlauben.

Die Zeichnung zeigt ferner, daß die Gelenke 21, 22 am Halter 2 und Gelenkverbinder 16, 17 und an den Seitenwänden 12, 13 so gestaltet sind, daß auch bei niedergeklapptem Halter 2 genügend Stauraum zwischen der Unterseite 23 des Halters 2 und dem Boden 11 des Gehäuseunterteils 1 verbleibt, um dort den entsprechenden Faservorrat getrennt von der Oberseite des Halters 2 zu lagern.

Die schwalbenschwanzförmige Gestaltung der Gelenkverbinder 16, 17 ist in der Darstellung an der Seitenwand 12 zu erkennen, die von den Gelenken 21, 22 am Rand 24 des Halters 2 nicht belegt sind.

Vom Boden 11 des Gehäuseunterteils 1 ragen aus dem Stand der Technik bekannte Niederhalter 3, 4 sowie Führungselemente 5, 6 auf, deren Krümmung den zulässigen Biegeradius der Lichtwellenleiterfasern begrenzt. Derartige Niederhalter 3, 4 erstrecken sich auch von den Stirnwänden 14, 15 sowie von den Seitenwänden 12, 13.

Im Halter 2 sind Seitenausnehmungen 25, 26 eingeformt, die mit den vom Boden 11 des Gehäuseunterteils 1 abragenden Führungselementen 5, 6 korrespondieren. Ferner besitzt der Halter 2 eine zentrale Bohrung 27, welche im zugeklappten Zustand über die Führungshülse 7, welche vom Boden 11 des Gehäuseunterteils 1 abragt, eingreift. Auf diese Weise können bei geschlossenem Halter 2 weitere Gehäuseunterteile 1 auf einen Gewindedorn aufgesetzt werden, so daß mehrere solcher Gehäuseunterteile 1 übereinander festgelegt werden können.

Zwischen den Stirnwänden 14, 15 des Gehäuseunterteils 1 sind die Kabelein- und -auslaßöffnungen 141, 142, 151, 152 eingelassen. In der Kabeleinlaßöffnung 141 ist eine Bündelader 8 angedeutet, in der mehrere Lichtwellenleiterfasern 9 zusammengefaßt sind.

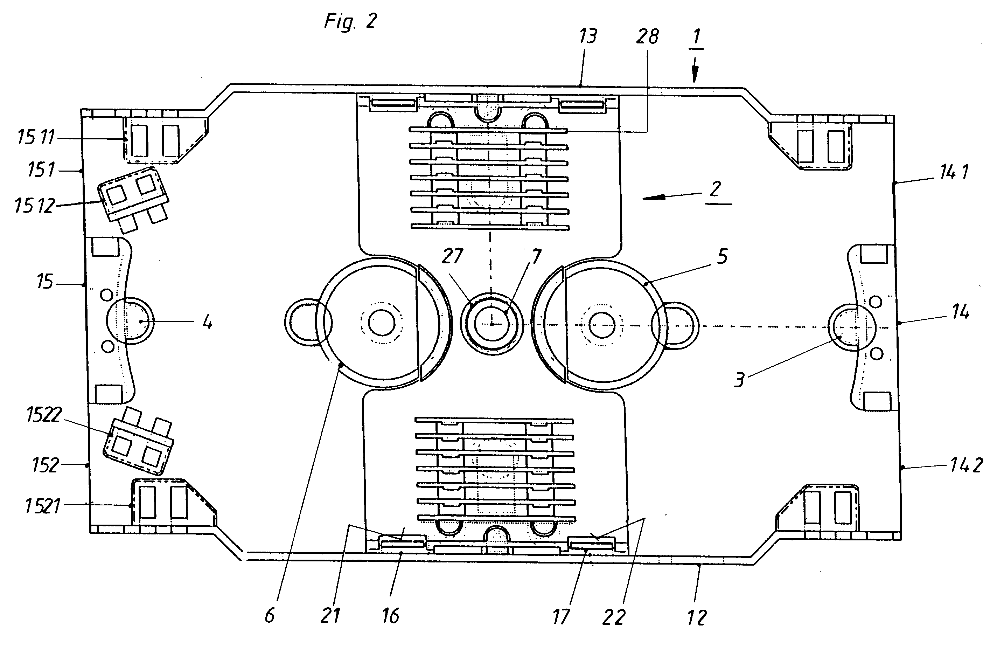

Figur 2 zeigt das Gehäuseunterteil 1 in Draufsicht mit dem Halter 2 in eingeklapptem Zustand. Auf dem Halter 2 sind die Rastelemente 28 für die Spleiße oder Koppler angeformt. In den Kabeleinführungs- und -ausführungsöffnungen 151, 152 der Stirnwand 15 sind die Befestigungselemente 1511, 1521, 1512, 1522 für die ein- und auslaufenden Kabelstränge angedeutet. Gleiche Elemente haben sonst gleiche Bezugszahlen erhalten wie in Figur 1.

## Patentansprüche

1. Gehäuse für optische Komponenten mit einem Gehäuseunterteil und wenigstens einem, als separates Bauteil ausgebildeten und am Gehäuseunterteil anlenkbaren Halter für Koppler und/oder Spleiße, dadurch gekennzeichnet, daß der Halter (2) durchgehend quer über die Gehäusebreite verläuft und mit seinen freien Endbereichen an den Seitenwänden (12, 13) des Gehäuseunterteils (1) wechselseitig abklappbar angelenkt ist.

2. Gehäuse nach Anspruch 1, dadurch gekennzeichnet, daß der Halter (2) in einem vorgegebenen Abstand vom Boden (11) des Gehäuseunterteils (1) an den Seitenwänden (12, 13) festgelegt ist.

3. Gehäuse nach Ansprüchen 1 und 2, dadurch gekennzeichnet, daß der Halter (2) über lösbare Gelenkverbindungen (16, 17, 21, 22) mit den Seitenwänden (12, 13) des Gehäuseunterteils (1) verbunden ist.

4. Gehäuse nach Anspruch 1, dadurch gekennzeichnet, daß am Boden (11), den Seitenwänden (12, 13) und den Stirnwänden (14, 15) des Gehäuseunterteils (1) Befestigungselemente (1511, 1512, 1521, 1522), Umlenkungen (5, 6) und Niederhalter (3, 4) für ungeschnittene, durchlaufende Lichtwellenleiterfasern (9) oder ungespleißte Reservefasern angeformt sind.
